## Europäisches Patentamt
## European Patent Office
## Office européen des brevets

(19)

(11) Veröffentlichungsnummer: **0 240 916 B1**

# EUROPÄISCHE PATENTSCHRIFT

(12)

(45) Veröffentlichungstag der Patentschrift: **27.11.91**

(51) Int. Cl.⁵: **H01R 25/00, H01R 25/16**

(21) Anmeldenummer: **87104780.9**

(22) Anmeldetag: **01.04.87**

(54) **Installationsgerät für Leitungsführungskanäle.**

(30) Priorität: **05.04.86 DE 3611496**
**08.04.86 DE 8609416 U**

(43) Veröffentlichungstag der Anmeldung:
**14.10.87 Patentblatt 87/42**

(45) Bekanntmachung des Hinweises auf die
Patenterteilung:
**27.11.91 Patentblatt 91/48**

(84) Benannte Vertragsstaaten:
**AT BE CH DE ES FR GB IT LI NL SE**

(56) Entgegenhaltungen:
**EP-A- 0 009 151**
**EP-A- 0 109 876**
**DE-A- 2 949 007**
**FR-A- 2 119 085**
**FR-A- 2 402 957**

(73) Patentinhaber: **TEHALIT Kunststoffwerk GmbH**
**Postfach 128**
**W-6751 Heltersberg/Pfalz(DE)**

(72) Erfinder: **Pollak, Gottfried, Dipl.-Ing.**
**Finkenweg 2**
**W-6757 Waldfischbach-Burgalben(DE)**
Erfinder: **Otte, Günter, Ing. grad.**
**Am Steinhügel 61**
**W-5860 Iserlohn(DE)**

(74) Vertreter: **Patentanwälte Dipl.-Ing. F.W. Möll**
**Dipl.-Ing. H.Ch. Bitterich**
**Langstrasse 5 Postfach 2080**
**W-6740 Landau/Pfalz(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Installationsgerät mit Einrichtungen zum Einsetzen und Befestigen desselben in Leitungsführungskanälen, insbesondere in Brüstungskanälen, mit einem etwa quaderförmigen, aus einem Unterteil und einem Oberteil bestehenden Gehäuse mit einer in Längsrichtung verlaufenden Mittelebene, das je eine Leitungseinführungsöffnung an beiden Stirnseiten aufweist, und mit Kontaktschienen, die im Bereich der Stirnseiten mit Vorrichtungen zum Anschließen elektrischer Leitungen ausgerüstet sind. Ein solches Installationsgerät ist beispielsweise aus der EP-A-0009151 bekannt.

Geräteeinbaudosen zum Einbauen von standardisierten Geräten, beispielsweise Schalter, Steckdosen usw. in Leitungsführungskanäle sind in großer Anzahl handelsüblich und bekannt, z. B. aus dem DE-U-7047743 oder dem DE-U-7728102. Sie sind bodenseitig im Inneren der Leitungsführungskanäle ermöglicht. Um die in den Leitungsführungskanälen laufenden Leitungen in die Geräteeinbaudose einführen und anschließend mit dem Installationsgerät verbinden zu können, sind in den Wandungen der Dose z. B. Sollbruchstellen vorgesehen.

Aus der DE-B-2838371 ist eine Mehrfach-Steckdose bekannt, deren Steckkontakte mit Hilfe von Stromschienen fest verdrahtet sind. Die Stromschienen sind endseitig mit Steckkontakten ausgerüstet. Soll diese Mehrfach-Steckdose in einen Leitungsführungskanal eingebaut werden, so wird das trogförmige Unterteil von hinten, die flache Frontplatte mit den Steckertöpfen von vorne an den Deckel geschraubt, der den Leitungsführungskanal verschließt.

Nachteilig bei allen bisher bekannten und handelsüblichen Installationsgeräten für Leitungsführungskanäle ist nicht zuletzt der verhältnismäßig große Platz- und Raumbedarf. Dies resultiert daher, daß die verwendeten Installationsgeräte Normgeräte sind, wobei die Norm jedoch auf die Größe der bekannten und ebenfalls genormten Unterputzdosen abgestimmt ist. Während die Leitungsführungskanäle einer ständigen Weiterentwicklung unterliegen, die nicht zuletzt zu einer Verkleinerung der Abmessungen bei gleicher Leistungsfähigkeit geführt hat, sind dieser technischen Entwicklung durch die handelsüblichen Installationsgeräte selbst Grenzen gesetzt.

Ein weiteres Hemmis bei den bekannten Lösungen stellt die Tatsache dar, daß die Verbindung zwischen den Leitungen und den Installationsgeräten praktisch nur vor Ort auf der Baustelle erfolgen kann. Vormontage in der Werkstatt ist nur begrenzt möglich. Die Verbindung der Leitungsenden mit den Anschlüssen der handelsüblichen Installationsgeräte ist oftmals zeitraubend, ebenso das anschließende Einbauen der Geräte in die Geräteeinbaudose und der Geräteeinbaudosen in den Leitungsführungskanal. Oftmals muß dann das Gerät im Leitungsführungskanal selbst noch ausgerichtet werden, wozu weitere Montagemaßnahmen nötig sind.

Diese dem Stande der Technik entsprechende Schutzkontaktstromsteckschiene ist in mehrfacher Hinsicht verbesserungswürdig. Erstens ist es nachteilig, die Polbuchsen so anzuordnen, daß der geometrische Ort der jeweils gleichphasig angeschlossenen Polbuchsen auf verschiedenen Verbindungsgeraden liegt. Insbesondere beim Anschluß von sogenannten Winkelsteckern ergeben sich hierdurch Raumprobleme, da die Winkelstecker sich gegenseitig behindern. Weiter läßt sich durch die gewählte Polbuchsenanordnung eine Minimierung des Breitenplatzbedarfs des Gehäuses nicht erreichen. Drittens ist nachteilig, daß die Teile des Gehäuses einzeln an den Deckel des Kanals angelegt und mit diesem verbunden werden müssen. Durch das Einklemmen des Deckels in eine Trennfuge des Gehäuses können sich ungünstige Einflüsse auf die Funktionsmaße der Steckdosen ergeben. Fünftens ist die Integration der Steckdoseneinzelteile an die Kanalabdeckung recht aufwendig. Ist der Deckel wie üblich auf das Kanalunterteil nur aufgesteckt, kann beim Herausziehen eines Steckers auch der Deckel herausgezogen werden. Sechstens ist es nachteilig, daß die Kontaktschienen, die stirnseitig mit Steckkontakten ausgestattet sind, nur unter Zuhilfenahme kabelfester Steckverbinder anschließbar sind. Siebtens ist nachteilig, daß die Stirnabschlußwände des Gehäuses abnehmbar und asymmetrisch ausgebildet sind. Ein Verlust dieser Teile bei der Montage ist nicht auszuschließen.

Der vorliegenden Erfindung liegt deshalb die Aufgabe zugrunde, ein Installationsgerät der eingangs genannten Art anzugeben, das auch auf der Baustelle einfach, schnell und sicher zu montieren und ohne Sonderbauelemente zu kontaktieren ist und dessen äußere Abmessungen verkleinert werden können, ohne daß die elektrische Sicherheit darunter leidet.

Diese Aufgabe wird dadurch gelöst, daß das Unterteil über das Oberteil hinaus au beiden Stirnseiten Pinsfürhig derart verlängert ist, daß je ein Leitungsanschlußraum gebildet wird, der bezogen auf die Mittelebene asymmetrisch zur selben Seitenwand des Gehäuses verschoben ist, der mit einem Deckel verschließbar ist und die Leitungseinführungsöffnung aufweist, und daß die Befestigungseinrichtung auf der Unterseite des Gehäuseunterteils angeordnet und von der Oberseite des Gehäuses aus zu bedienen ist.

Die zu der Mittelebene des Leitungsführungskanals asymmetrische Anordnung der Anschlußräume ermöglicht es, durch einfaches Drehen des Installationsgerätes Leitungen entweder aus dem oberen oder dem unteren Teilkanal in das Installationsgerät einzuführen, ohne die Trennebene im Kanal durchbrechen zu müssen. Die Anordnung von mit einem Deckel verschließbaren Anschlußräumen und einem Gehäuseoberteil erleichtert das Anschließen der Leitungen, insbesondere wenn als Leitungsanschlußvorrichtungen schraubenlose Klemmen oder ähnliches vorgesehen sind, und ermöglicht eine drastische Reduzierung der äußeren Abmessungen ohne Beeinträchtigung der elektrischen Sicherheit. Die Zugänglichkeit der Befestigungsmittel von der Oberseite des Gehäuses her ermöglicht eine besonders einfache und schnelle Befestigung bzw. Lagejustierung im Leitungsführungskanal.

Die an beiden Stirnwänden des Gehäuses vorgesehenen, asymmetrischen Leitungsanschlußräume, insbesondere in Verbindung mit fest durchverbundenen Leitungsanschlußvorrichtungen in beiden Anschlußräumen, ermöglichen in besonders einfacher Weise die Montage der Geräte, wobei eine praktisch endgültige Vormontage in der Werkstatt möglich ist, wenn die Abstände zwischen den einzelnen Installationsgeräten, beispielsweise zwischen zwei aufeinanderfolgenden Steckdosen, bekannt sind.

Gemäß vorteilhafter Weiterbildungen der Erfindung ist der Deckel des Leitungsanschlußraums mit einem Filmscharnier an seinem Unterteil angelenkt und mit einem Rastverschluß schließbar. Auch das Oberteil der Zugentlastung ist vorzugsweise mit einem Filmscharnier am Unterteil angelenkt. Auf diese Weise läßt sich das gesamte Unterteil des Installationsgerätes einschließlich der beiden Anschlußräume und der Zugentlastungen in einem einzigen Arbeitsgang spritztechnisch herstellen.

Eine weitere Fertigungsvereinfachung durch die Möglichkeit der Verwendung identischer Bauteile ergibt sich, wenn zwei der Kabelanschlußvorrichtungen und gegebenenfalls der Durchverdrahtungen symmetrisch beidseits der Längsmittelebene des Gehäuses angeordnet sind. Es lassen sich dann identisch geformte Metallteile verwenden, die spiegelverkehrt eingesetzt werden und durch im Gehäuseunterteil eingeformte Stege gehalten und gestützt werden.

Während das Gehäuseunterteil üblicherweise aus einem thermoplastischen Kunststoffmaterial besteht, wird für das gesonderte Gehäuseoberteil vorzugsweise ein duroplastisches Material verwendet. Dies gilt insbesondere dann, wenn es sich bei dem Installationsgerät um eine Steckdose handelt, da hier immer mit Erwärmungen durch die Kontaktwiderstände zwischen Kontaktfeder und Steckerstift gerechnet werden muß.

Zur Aufnahme eines dekorativen Frontrahmens sind am Gehäuseunterteil gemäß einer vorteilhaften Weiterbildung stirnseitig senkrechte Verrastungsstege angeformt.

Eine andere Ausführungsform des Frontrahmens ist direkt auf den Leitungsführungskanal aufrastbar.

Gemäß einer vorteilhaften Weiterbildung der Erfindung übergreift der Frontrahmen beidseitig die Kanaldeckel und deckt so möglicherweise unschöne Sägeschnitte ab.

Um die Geräte selbst oder beispielsweise eingesteckte Stecker abzudecken und um dem fertig installierten Leitungsführungskanal eine einheitliche Optik zu geben, ist auf dem Frontrahmen eine Abdeckklappe montiert.

Vorzugsweise ist die Abdeckklappe mit dem Frontrahmen verrastbar.

Gemäß einer vorteilhaften Weiterbildung der Erfindung ist die Abdeckklappe gewölbt und läßt am unteren Ende auch im geschlossenen Zustand einen Schlitz zum Frontrahmen. Auf diese Weise kann die Abdeckklappe auch geschlossen werden, wenn z. B. elektrische Anschlußkabel eingesteckt sind.

Besondere Vorteile bei der Fertigung der Stromschiene, insbesondere der Schutzkontaktschiene, ergeben sich dadurch, daß diese unter Bildung zweier Querschienen als $\pi$-förmiges Stanzteil ausgebildet ist. Von besonderem Vorteil ist in diesem Zusammenhang, daß an den Querschienen Hohlnietschäfte bildende Durchzüge materialeinheitlich angeformt und mit Hilfe dieser Durchzüge die Erdungskontakte angenietet werden können. Dies erspart die Verwendung separater Hohlnieten.

Durch einfaches Auswechseln der Stanzvorrichtung können an den Querschienen statt Durchzügen auch einfache Löcher gestanzt werden, beispielsweise wenn andere Bauteile befestigt werden sollen, z. B. massive Stifte, wie sie in Frankreich oder Großbritannien verwendet werden.

Anhand der Zeichnung soll die Erfindung in Form von Ausführungsbeispielen näher erläutert werden. Es zeigen:

Fig. 1    ein als Doppelsteckdose ausgebildetes Installationsgerät in perspektivischer Darstellung,

Fig. 2    eine Draufsicht auf das Gerät der Fig. 1 in teilweise geöffneter bzw. aufgebrochener Darstellung,

Fig. 3    einen Querschnitt durch einen Leitungsführungskanal mit eingesetztem Installationsgerät als Sprengbild

Fig. 4    eine Außenansicht eines Leitungsführungskanals mit eingesetztem Installationsgerät und aufgesetztem Frontrahmen in perspektivischer Darstellung,

Fig. 5    eine Schutzkontaktschiene mit Querschienen und daran angenieteten Erdungsbügeln,

Fig. 6    einen Querschnitt durch das Stanzteil

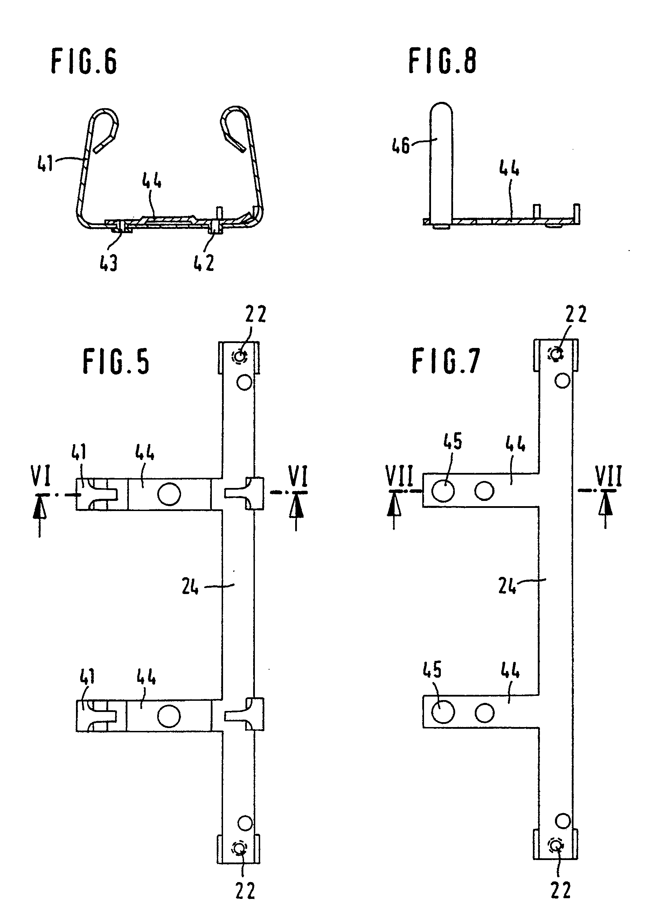

der Fig. 5 entlang der Linie VI-VI,

Fig. 7    eine abgewandelte Ausführungsform
des Stanzteils der Fig. 5 und

Fig. 8    einen Schnitt durch das Stanzteil der
Fig. 7 entlang der Linie VIII-VIII mit
eingesetztem Erdungsstift.

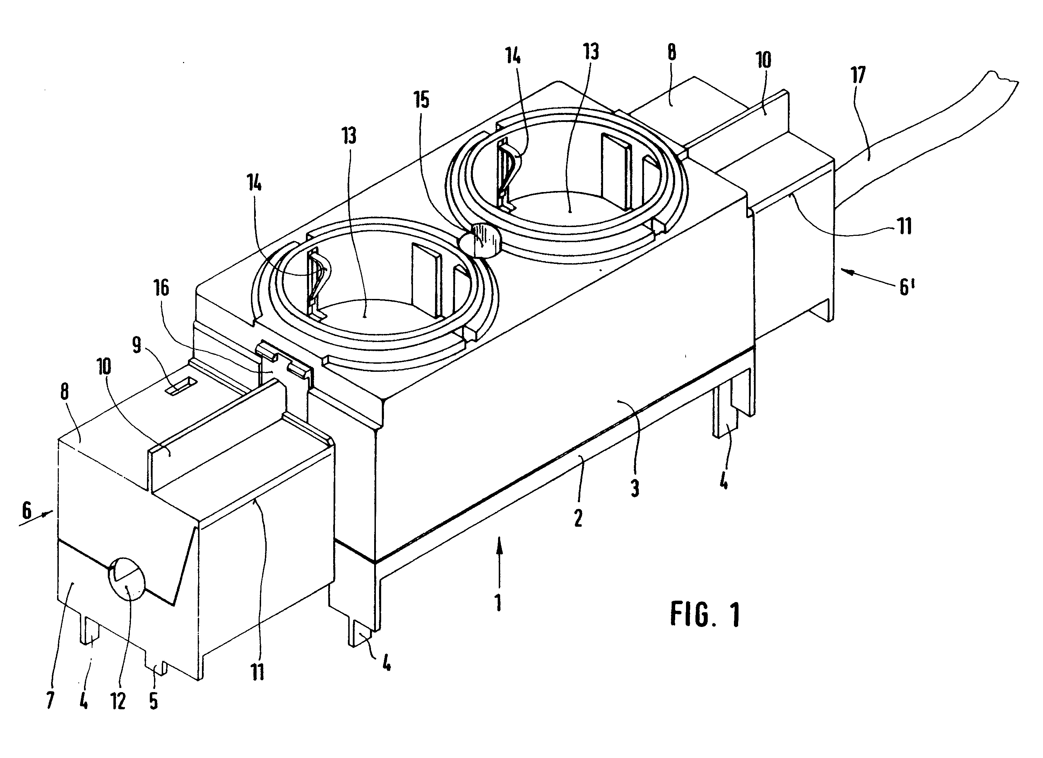

In Fig. 1 erkennt man ein Installationsgerät 1, welches als Doppel-Steckdose ausgebildet und zum Einsatz in Leitungsführungskanäle bestimmt ist. Das Gehäuse besteht aus einem Unterteil 2, beispielsweise aus einem thermoplastischen Kunststoff, und einem Oberteil 3, vorzugsweise aus einem duroplastischen Material. An der Unterseite des Unterteils 2 erkennt man Stützfüße 4, mit denen sich das Gerät 1 am Boden des Leitungsführungskanals abstützt, und Führungsnasen 5, die in Längsnuten der Leitungsführungskanäle eingesetzt werden können. Gehäuseunterteil und -oberteil 2, 3 sind miteinander vernietet.

An beiden Stirnseiten des Gehäuses erkennt man Leitungsanschlußräume 6,6', die beide zu derselben Seitenwand des Gehäuses hin verschoben und mit dem Gehäuseunterteil 2 einstückig sind.

Die Leitungsanschlußräume 6,6' bestehen aus einem festen Unterteil 7 und einem über ein Filmscharnier 11 angelenkten Deckel 8, auf dessen Oberseite eine Kanaltrennwandverlängerung 10 angeformt ist. Eine Öffnung 12 zum Einführen der Kabel 17 befindet sich seitlich neben der durch die Kanaltrennwandverlängerung 10 gehenden Mittelebene des Gerätes.

Deckel 8 und Unterteil 7 der Anschlußräume 6,6' werden mit Hilfe eines Rastverschlusses 9 miteinander verrastet, der nur mit Hilfe eines Werkzeuges, beispielsweise einer Schraubendreherklinge, wieder geöffnet werden kann.

Im Gehäuseoberteil 3 erkennt man zwei Steckertöpfe 13 mit Schutzkontakten 14, wie sie bei deutschen Schutzkontaktsteckdosen üblich sind. Zwischen den beiden Steckertöpfen 13 besteht ein Zugang zu einer zentralen Befestigungsvorrichtung 15 am Boden des Unterteils 2, mit der das Gerät 1 im Leitungsführungskanal befestigt wird.

In dem rückseitigen Anschlußraum 6' ist ein Leitungsende 17 fest montiert, um so die Montagearbeiten auf der Baustelle zu verkürzen.

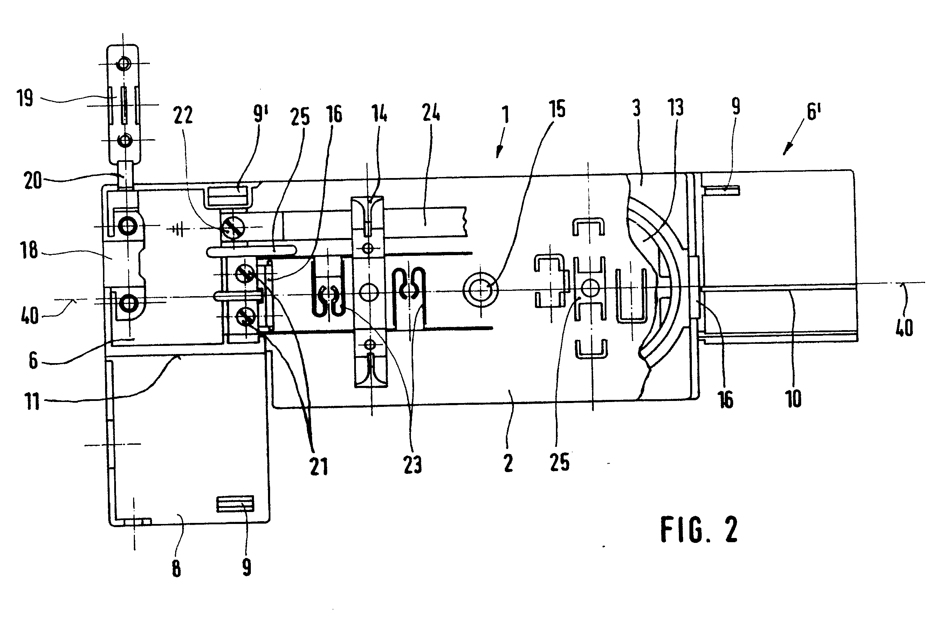

Fig. 2 zeigt einen Blick in das Gerät der Fig. 1, wobei der eine Anschlußraum 6 geöffnet und das Gehäuseoberteil 3 größtenteils aufgebrochen ist.

In dem geöffneten Anschlußraum 6 erkennt man eine Zugentlastung, bestehend aus einem festen Unterteil 18 und einem beweglichen Oberteil 19, die über ein Filmscharnier 20 miteinander verbunden sind.

Ferner erkennt man feste Leitungsanschlußvorrichtungen 21,22, die hier als Schraubklemmen ausgeführt sind. Anstelle von Schraubklemmen sind jedoch auch schraubenlose Klemmen, Crimp-Anschlüsse, Schweißverbindungen oder ähnliches denkbar. Die Anschlüsse 21 für Phase und Nulleiter liegen symmetrisch zur Mittelebene 40, während der Anschluß 22 für die Schutzleiter-kontaktschiene 24, an dem die Schutzkontakte 14 befestigt sind, seitlich versetzt angeordnet ist.

Die symmetrische Anordnung von Phase und Nulleiter ermöglicht die Verwendung identisch geformter kontaktschienen 23 als Metallteile, die spiegelverkehrt eingebaut sind.

Alle Metallteile 21,22,23,24,14 werden durch im Unterteil 2 eingeformte Stege 25 in Position gehalten und gestützt, wobei entsprechende Ausbildungen im Gehäuseoberteil 3 die Metallteile fixieren.

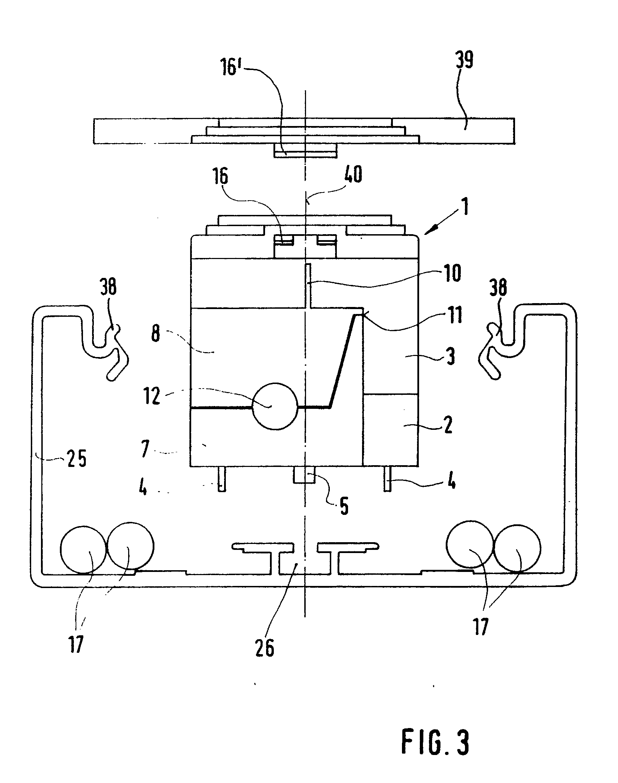

Fig. 3 zeigt einen Querschnitt durch einen Leitungsführungskanal 25 mit bodenseitiger Befestigungsnut 26, das Installationsgerät 1 und einen dekorativen Frontrahmen 39. Durch die erheblich verringerten Maße, insbesondere die verringerte Breite des Installationsgerätes 1, bleibt zwischen dem Gerät 1 und den Befestigungsmitteln 38 des Leitungsführungskanals 25 genügend Platz, um Leitungen 17 einlegen zu können.

An den Stirnseiten des Gerätes 1 sind senkrechte Verrastungsstege 16 angeformt. Auf diese Verrastungsstege 16 werden entsprechende Gegenstücke 16' an der Unterseite des dekorativen Frontrahmens 39 aufgerastet. Auf diese Weise ergibt sich eine einfach montierbare und wieder demontierbare Konstruktion.

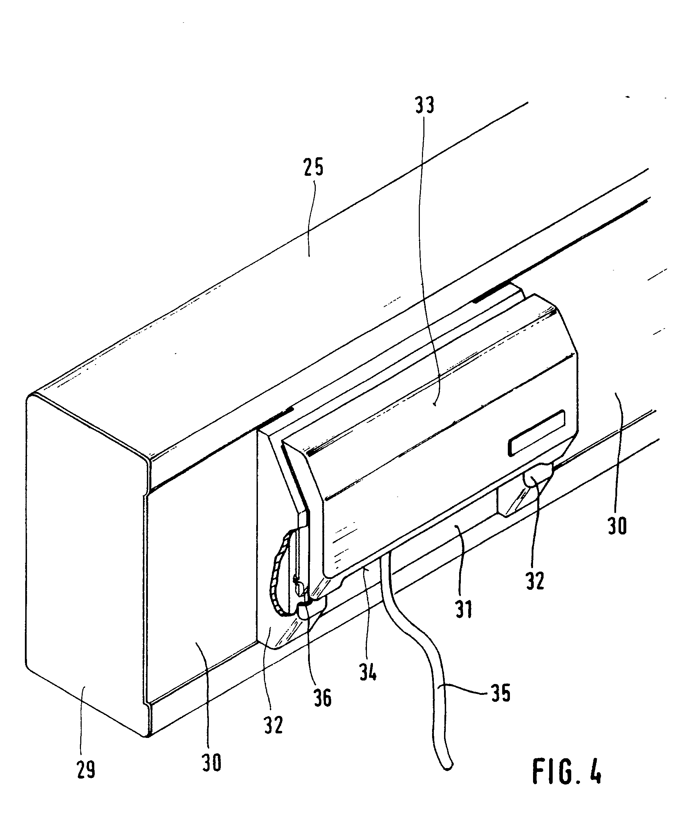

Fig. 4 zeigt in perspektivischer Darstellung die Außenansicht eines Leitungsführungskanals, beispielsweise eines Brüstungskanals, mit eingebauter Doppelsteckdose als Beispiel eines Installationsgerätes. Der Kanal 25 ist in üblicher Weise mit einem Endstück 29 abgedeckt. Im Bereich des Installationsgerätes ist ein dekorativer Frontrahmen 31 auf den Kanal 25 aufgerastet und überdeckt auf beiden Seiten die Enden der Kanaldeckel 30. Der Außenrahmen 31 besitzt Seitenwände 32 und eine bewegliche Abdeckklappe 33, die mit Hilfe von Rastnasen 36 mit den Seitenwänden 32 im geschlossenen Zustand verrastbar ist. Die Abdeckklappe 33 ist gewölbt und läßt im geschlossenen Zustand an ihrem unteren Ende einen Schlitz 34 zum Frontrahmen 31 frei. Auf diese Weise ist es möglich, auch bei eingesteckten Anschlußkabeln 35 die Klappe 33 zu schließen, um ein optisch ansprechendes Bild zu ermöglichen.

Fig. 5 zeigt die Schutzkontaktschiene 24, an der zwei Querschienen 44 angeformt sind, so daß ein $\pi$-förmiges Stanzteil entsteht. Auf jeder Querschiene 44 ist ein Erdungsbügel 41 aufgenietet.

Wie der in Fig. 6 dargestellte Querschnitt zeigt, werden an den Querschienen 44 zunächst Durchzüge 42 angeformt, die dann nach Art von Hohlnieten (43) umgelegt werden und Querschiene 44 und Erdungsbügel 41 miteinander verbinden.

Fig. 7 zeigt eine auf die Anforderungen einer ausländischen Norm hin vorbereitete Schutzkontaktschiene 24'. In den Querschienen 44 sind einfache Löcher 45 vorgesehen. In diesen Löchern 45 wird beispielsweise ein massiver Erdungsstift 46, wie er in Fig. 8 dargestellt ist, festgenietet.

## Patentansprüche

1. Installationsgerät mit Einrichtungen zum Einsetzen und Befestigen desselben in Leitungsführungskanälen (25), insbesondere in Brüstungskanälen, mit einem etwa quaderförmigen, aus einem Unterteil (2) und einem Oberteil (3) bestehenden Gehäuse (1) mit einer in längsrichtung verlaufenden Mittelebene (40), das je eine Leitungseinführungsöffnung (12) an beiden Stirnseiten aufweist, und mit Kontaktschienen (23,24), die im Bereich der Stirnseiten mit Vorrichtungen (21,22) zum Anschließen elektrischer Leitungen (17) ausgerüstet sind, dadurch gekennzeichnet, daß das Unterteil (2) über das Oberteil (3) hinaus au beiden Stirnseiten einstückig derart verlängert ist, daß je ein Leitungsanschlußraum (6,6') gebildet wird, der bezogen auf die Mittelebene (40) asymmetrisch zur selben Seitenwand des Gehäuses (1) verschoben ist, der mit einem Deckel (8) verschließbar ist und die Leitungseinführungsöffnung (12) aufweist, und daß die Befestigungseinrichtung (15) auf der Unterseite des Gehäuseunterteils (2) angeordnet und von der Oberseite des Gehäuses (1) aus zu bedienen ist.

2. Installationsgerät nach Anspruch 1, dadurch gekennzeichnet, daß die Leitungsanschlußvorrichtungen (21,22) in beiden Leitungsanschlußräumen (6,6') fest durchverbunden sind.

3. Installationsgerät nach Anspruch 1 oder 2, dadurch gekennzeichnet, daß die Leitungsanschlußvorrichtungen (21,22) im Anschlußraum (6) schraubenlose Klemmen sind.

4. Installationsgerät nach wenigstens einem der Ansprüche 1 bis 3, dadurch gekennzeichnet, daß das Oberteil (19) der Zugentlastung und der Deckel (8) des Anschlußraums (6,6') mit einem Filmscharnier (11) angelenkt sind und der Deckel (8) mit einem Rastverschluß (9, 9') schließbar ist.

5. Installationsgerät nach wenigstens einem der Ansprüche 1 bis 4, dadurch gekennzeichnet, daß zwei der festen Leitungsanschlüsse (21) symmetrisch beidseits der Längsmittelebene (40) des Gehäuses (1) angeordnet sind.

6. Installationsgerät nach Anspruch 1, dadurch gekennzeichnet, daß das Gehäuseoberteil (3) aus duroplastischem Isolierstoffmaterial besteht.

7. Installationsgerät nach wenigstens einem der Ansprüche 1 bis 6, dadurch gekennzeichnet, daß im Gehäuse (1) eine oder mehrere Steckdosen (13) realisiert sind, daß die Kontaktschienen (23,24) im Oberteil (3) gelagert sind, daß eingeformte Stege (25) im Gehäuseunterteil (2) die Pol-und Schutzkontakte (14,21,22,23,24) in Position halten und stützen und daß im Gehäuseoberteil (3) Steckertöpfe (13) eingeformt sind.

8. Installationsgerät nach wenigstens einem der Ansprüche 1 bis 7, dadurch gekennzeichnet, daß in einem Leitungsanschlußraum (6') ein Leitungsende (17) fest angeschlossen ist.

9. Installationsgerät nach wenigstens einem der Ansprüche 1 bis 8, dadurch gekennzeichnet, daß ein dekorativer Frontrahmen (39) vorgesehen ist und daß am Gehäuseunterteil (2) stirnseitig senkrechte Verrastungsstege (16) angeformt sind, die den dekorativen Außenrahmen (39) halten.

10. Installationsgerät nach wenigstens einem der Ansprüche 1 bis 8, dadurch gekennzeichnet, daß ein dekorativer Frontrahmen (31, 39) vorgesehen ist, der auf den Installationskanal (25) aufrastbar ist.

11. Installationsgerät nach Anspruch 9 oder 10, dadurch gekennzeichnet, daß der Frontrahmen (31,39) beidseitig die Installationskanaldeckel (30) übergreift.

12. Installationsgerät nach Anspruch 9, 10 oder 11, dadurch gekennzeichnet, daß der Frontrahmen (31) eine Abdeckklappe (33) aufweist, die das Installationsgerät (1) abdeckt und mit dem Frontrahmen (31) in Schließstellung verrastbar ist.

13. Installationsgerät nach Anspruch 12, dadurch gekennzeichnet, daß die Abdeckklappe (33) gewölbt ist und am unteren Ende einen Schlitz (34) zum Frontrahmen (31) freiläßt.

14. Installationsgerät nach wenigstens einem der Ansprüche 7 bis 13, dadurch gekennzeichnet, daß die Schutzkontaktschiene (24) unter Bildung zweier Querschienen (44) als π-förmiges Stanzteil ausgebildet ist.

15. Installationsgerät nach Anspruch 14, dadurch gekennzeichnet, daß an den Querschienen (44) Hohlnietschäfte (43) bildende Durchzüge (42) materialeinheitlich angeformt sind und daß mit Hilfe dieser Durchzüge (42) die Erdungskontakte (41) angenietet sind.

## Claims

1. An installation device comprising equipment for the insertion and attachment thereof in cable conduits (25), in particular in parapet ducts, comprising a housing (1) which is of approximately parallelepiped formation and is composed of a lower part (2) and an upper part (3), with a central plane (40) which extends in the longitudinal direction and which contains a respective cable insertion opening (12) at its two end sides, and with contact bars (23, 24) which in the region of the end sides are equipped with devices (21, 22) for the connection of electrical cables (17), characterised in that the lower part (2) is integrally extended beyond the upper part (3) at its two end sides in such manner that a respective cable connection chamber (6, 6') is formed which, relative to the central plane (40) is asymmetrically offset with respect to the same side wall of the housing (1), and which can be closed by a cover (8) and contains the cable insertion opening (12), and that the fixing device (15) is arranged on the underside of the lower part (2) of the housing and can be operated from the upper side of the housing (1).

2. An installation device as claimed in Claim 1, characterised in that the cable connection devices (21, 22) are permanently through-connected in the two cable connection chambers (6, 6').

3. An installation device as claimed in Claim 1 or Claim 2, characterised in that the cable connection devices (21, 22) in the connection chamber (6) are screwless terminals.

4. An installation device as claimed in at least one of Claims 1 to 3, characterised in that the upper part (19) of the strain relief device and the cover (8) of the connection chamber (6, 6') are coupled by a film hinge (11) and the cover (8) can be closed by means of a snap lock (9, 9').

5. An installation device as claimed in at least one of Claims 1 to 4, characterised in that two of the fixed cable terminals (21) are arranged symmetrically on both sides of the longitudinal central plane (40) of the housing (1).

6. An installation device as claimed in Claim 1, characterised in that the upper part (3) of the housing consists of duroplastic insulating material.

7. An installation device as claimed in at least one of Claims 1 to 6, characterised in that one or more plug sockets (13) are formed in the housing (1), that the contact bars (23, 24) are mounted in the upper part (3), that moulded pins (25) in the lower part (2) of the housing hold in position and support the pole and safety contacts, (14, 21, 22, 23, 24) and that plug recesses (13) are formed in the housing upper part (3).

8. An installation device as claimed in at least one of Claims 1 to 7, characterised in that one cable end (17) is permanently connected in a cable connection chamber (6').

9. An installation device as claimed in at least one of Claims 1 to 8, characterised in that a decorative front frame (39) is provided and that vertical locking pins (16) are formed at the end sides of the housing lower part (2), which locking pins (16) retain the decorative outer frame (39).

10. An installation device as claimed in at least one of Claims 1 to 8, characterised in that a decorative front frame (31, 39) is provided which can be locked onto the conduit (25).

11. An installation device as claimed in Claim 9 or 10, characterised in that the front frame (31, 39) engages over the conduit cover (30) on both sides.

12. An installation device as claimed in Claim 9, 10 or 11, characterised in that the front frame (31) comprises a protective cover (33) which covers the installation device (1) and can be locked to the front frame (31) in the closed position.

13. An installation device as claimed in Claim 12, characterised in that the protective cover (33) is curved and at the lower end defines a slot (34) with the front frame (31).

14. An installation device as claimed in at least one of Claims 7 to 13, characterised in that the safety contact bar (24) is designed as a π-shaped punched component so as to form two cross-bars (44).

15. An installation device as claimed in Claim 14, characterised in that passages (42), which form compression rivet shanks (43), are integrally formed with the cross-bars (44) and that the earthing contacts (41) are riveted-on with the aid of these passages (42).

**Revendications**

1. Appareil d'installation comportant des dispositifs pour sa mise en place et sa fixation dans des conduits de câbles (25), notamment dans des conduits d'allège, comportant un boîtier (1) à peu près parallélépipédique, constitué d'une partie inférieure (2) et d'une partie supérieure (3) avec un plan médian (40) s'étendant dans la direction longitudinale, lequel présente une ouverture d'entrée de câbles (12) sur les deux côtés frontaux et avec des rails de contact (23, 24) qui sont équipés de dispositifs (21, 22), dans la région des faces frontales, pour le raccordement de lignes électriques (17), caractérisé en ce que la partie inférieure (2) est prolongée d'une seule pièce au-delà de la partie supérieure (3), sur les deux faces frontales, de manière qu'il se forme un compartiment de branchement de câble (6, 6') qui est asymétriquement déplacé vers la même paroi latérale du boîtier (1), asymétriquement par rapport au plan médian (40), lequel compartiment peut être fermé par un couvercle (8) et présente l'ouverture d'entrée de câbles (12) et en ce que le dispositif de fixation (15) est placé sur la face inférieure de la partie inférieure de boîtier (2) et est manoeuvré à partir de la face supérieure du boîtier (1).

2. Appareil d'installation selon la revendication 1, caractérisé en ce que les dispositifs de raccordement de câble (21, 22) sont connectés de manière fixe dans les deux compartiments de raccordement de câbles (6, 6').

3. Appareil d'installation selon la revendication 1 ou 2, caractérisé en ce que les dispositifs de raccordement de câbles(21, 22) du compartiment de raccordement (6) sont des bornes sans vis.

4. Appareil d'installation selon l'une au moins des revendications 1 à 3, caractérisé en ce que la partie supérieure (19) de la décharge de traction et le couvercle (8) du compartiment de raccordement (6, 6') s'articulent par une charnière en pellicule (11) et en ce que le couvercle (8) peut être fermé par une fermeture à encliquetage (9, 9').

5. Appareil d'installation selon l'une au moins des revendications 1 à 4, caractérisé en ce que deux des connexions de câbles (21) fixes sont disposées symétriquement des deux côtés du plan médian longitudinal (40) du boîtier (1).

6. Appareil d'installation selon la revendication 1, caractérisé en ce que la partie supérieure de boîtier (3) est en matière isolante thermodurcissable.

7. Appareil d'installation selon l'une au moins des revendications 1 à 6, caractérisé en ce que dans le boîtier (1) sont réalisées une ou plusieurs prises femelles (13), en ce que les rails de contact (23, 24) sont montés dans la partie supérieure (3), en ce que des cloisons (25) formées dans la partie inférieure de boîtier (2) maintiennent en position et soutiennent les contacts de pôle et de protection (14, 21, 22, 23, 24) et en ce que des godets de connecteur (13) sont formés dans la partie supérieure de boîtier (3).

8. Appareil d'installation selon l'une au moins des revendications 1 à 7, caractérisé en ce qu'une extrémité de câble (17) est raccordée de manière fixe dans un compartiment de raccordement de câbles (6').

9. Appareil d'installation selon l'une au moins des revendications 1 à 8, caractérisé en ce qu'il est prévu un cadre frontal (39) décoratif et en ce qu'il est formé, sur la partie inférieure de boîtier (2), des nervures d'encliquetage (16') verticales, frontales, qui maintiennent le cadre extérieur (39) décoratif.

10. Appareil d'installation selon l'une au moins des revendications 1 à 8, caractérisé en ce qu'il est prévu un cadre frontal (31, 39) décoratif qui peut être encliqueté sur le conduit d'installation (25).

11. Appareil d'installation selon la revendication 9 ou 10, caractérisé en ce que le cadre frontal (31, 39) passe des deux côtés sur le couvercle (30) du conduit d'installation.

12. Appareil d'installation selon les revendications 9, 10 ou 11, caractérisé en ce que le cadre frontal (31) comporte un capot (33) qui recouvre l'appareil d'installation (1) et qui peut s'encliqueter avec le cadre frontal (31) en position de fermeture.

13. Appareil d'installation selon la revendication 12, caractérisé en ce que le capot (33) est bombé et dégage à l'extrémité inférieure, une fente (34) en direction du cadre frontal (31).

14. Appareil d'installation selon l'une au moins des revendications 7 à 13, caractérisé en ce que le rail de contact de protection (34) est un élément découpé en $\pi$ qui forme deux rails transversaux (44).

15. Appareil d'installation selon la revendication 14, caractérisé en ce que des traversées (42) formant des tiges de rivets creux (43), sont formées dans la même matière sur les rails transversaux (44) et en ce que les contacts de terre (41) sont rivetés à l'aide de ces traversées (42).

FIG. 1

EP 0 240 916 B1

FIG. 2

FIG. 3

FIG. 4

FIG.6

FIG.8

FIG.5

FIG.7